# EUROPEAN PATENT APPLICATION

(11) **EP 3 904 310 A1**
(43) Date of publication of application: **03.11.2021**
(21) Application number: 19902646.9
(22) Date of filing: 26.12.2019
(51) Int. Cl.: C04B 35/01, C08K 3/00, C08L 101/00

(54) **INORGANIC POWDER FOR HEAT-DISSIPATING RESIN COMPOSITION, HEAT-DISSIPATING RESIN COMPOSITION USING SAME, AND METHODS FOR PRODUCING SAME**

(30) Priority: 27.12.2018 JP 2018244647
(71) Applicant: SUMITOMO CHEMICAL COMPANY LIMITED, Chuo-ku Tokyo 104-8260 (JP)
(72) Inventor: NAKAYAMA, Atsushi, Niihama-shi, Ehime 792-8521 (JP); TAKEMOTO, Katsunori, Niihama-shi, Ehime 792-0811 (JP)
(74) Representative: Vossius & Partner Patentanwälte Rechtsanwälte mbB
(86) International application number: PCT/JP2019/051239
(87) International publication number: WO 2020/138335

(57) **Abstract**

Provided are an inorganic powder suitable for the production of a thick heat-dissipating resin composition and a heat-dissipating resin composition using the inorganic powder. An inorganic powder 10 for use in a heat-dissipating resin composition 20, comprises: first inorganic particles 11 having a particle diameter of less than 53 µm; and second inorganic particles 12 having a particle diameter of 100 µm or more and a BET specific surface area of 2 m²/g or less, a content of the second inorganic particles 12 being 30 to 95% by mass. The heat-dissipating resin composition 20 comprises: a resin 30; and an inorganic powder 10, wherein the heat-dissipating resin composition 20 contains the second inorganic particles 12 in an amount of 100 parts by weight per 100 parts by weight of the resin.

## Description

### TECHNICAL FIELD

The present invention relates to an inorganic powder for a heat-dissipating resin composition, a heat-dissipating resin composition using the same, and a method for producing the same.

### BACKGROUND ART

As a thermally conductive material to be arranged between a heat-generating element and a heat-dissipating member, a heat-dissipating resin composition comprising a silicone elastomer, a thermally conductive filler, and a ceramic sintered body is known (for example, Patent Document 1). In Patent Document 1, by setting the average particle diameter of the ceramic sintered body to 5 times or more the average particle diameter of the thermally conductive filler, it is possible to form a heat-dissipating resin composition having a small variation in mounting dimension.

In Patent Document 1, the average particle diameter of the thermally conductive filler is preferably 0.5 pm to 100 µm, and the average particle diameter of the ceramic sintered body is preferably 3 mm or less. Preferable blending ratios are 100 to 1200 parts by weight of the thermally conductive filler and 5 to 30 parts by weight of the ceramic sintered body per 100 parts by weight of the liquid silicone elastomer.

### PRIOR ART DOCUMENT

### PATENT DOCUMENT

Patent Document 1: JP 2000-232190 A

### SUMMARY OF THE INVENTION

### PROBLEMS TO BE SOLVED BY THE INVENTION

In recent years, electrification of various devices such as electric vehicles and robots has progressed. The dimensions of the gap between the heat-generating element and the heat-dissipating member varies depending on the mounting position and the mounting mode of the electronic component (heat generator) that is included in an individual electric device. There is a need for heat-dissipating resin compositions having various sizes and shapes such that the heat-dissipating resin compositions can be adapted to various dimensions of gaps. For example, a heat-dissipating resin composition thicker than conventional compositions (for example, with a thickness of 5 mm or more) is demanded.

However, when the heat-dissipating resin composition described in Patent Document 1 is formed thick, the ratio of the thermally conductive fillers not in contact with each other increases due to the use of fine thermally conductive fillers having an average particle diameter of 0.5 to 100 pm, and then the heat dissipation performance of the heat-dissipating resin composition deteriorates. When the blending amount of the thermally conductive filler is increased in order to improve the heat dissipation performance, there is a problem that the viscosity of the liquid resin composition before curing becomes excessively high, so that the fluidity of the liquid resin composition lowers and the moldability deteriorates. When the blending amount of the thermally conductive filler is increased, there is also a problem that physical properties such as tackiness, adhesiveness, and flexibility of the heat-dissipating resin composition lower.

Thus, an object of the present invention is to provide an inorganic powder suitable for producing a thick heat-dissipating resin composition and a heat-dissipating resin composition using the inorganic powder. Further, another object of the present invention is to provide production methods suitable for the production of an inorganic powder and a heat-dissipating resin composition.

### SOLUTIONS TO THE PROBLEMS

Embodiment 1 of the present invention is
an inorganic powder to be used in a heat-dissipating resin composition, comprising:
first inorganic particles having a particle diameter of less than 53 µm; and
second inorganic particles having a particle diameter of 100 µm or more and having a BET specific surface area of 2 m²/g or less, the content of the second inorganic particles being 30 to 95% by mass.

Embodiment 2 of the present invention is
the inorganic powder according to Embodiment 1, wherein in a cross-sectional SEM image, pores existing inside the second inorganic particles have a maximum dimension of less than 40 µm.

Embodiment 3 of the present invention is
the inorganic powder according to Embodiment 1 or 2, further comprising third inorganic particles having a particle diameter of 53 µm or more and less than 100 µm.

Embodiment 4 of the present invention is
a heat-dissipating resin composition comprising a resin and the inorganic powder according to any one of Embodiments 1 to 3, wherein
the heat-dissipating resin composition contains the second inorganic particles in an amount of 100 parts by weight or more per 100 parts by weight of the resin.

Embodiment 5 of the present invention is
a method for producing an inorganic powder used in a heat-dissipating resin composition, the inorganic powder comprising inorganic particles, the method comprising:
mixing first inorganic particles having a particle diameter of less than 53 µm and second inorganic particles having a particle diameter of 100 µm or more and having a BET specific surface area of 2 m²/g or less such that the inorganic powder contains 30 to 95% by mass of the second inorganic particles.

Embodiment 6 of the present invention is
the method for producing an inorganic powder according to Embodiment 5, further comprising:
mixing the first inorganic particles and/or the second inorganic particles with third inorganic particles having a particle diameter of 53 µm or more and less than 100 µm.

Embodiment 7 of the present invention is
a method for producing a heat-dissipating resin composition comprising a resin and an inorganic powder that comprises inorganic particles, the method comprising:
mixing first inorganic particles having a particle diameter of less than 53 µm, second inorganic particles having a particle diameter of 100 µm or more and having a BET specific surface area of 2 m²/g or less, and a resin raw material such that the inorganic powder contains the second inorganic particles in an amount of 30 to 95% by mass and the second inorganic particles are blended in an amount of 100 parts by weight or more per 100 parts by weight of the resin raw material; and
molding the mixture obtained.

Embodiment 8 of the present invention is
the method for producing a heat-dissipating resin composition according to Embodiment 7, wherein the inorganic powder further comprises third inorganic particles having a particle diameter of 53 µm or more and less than 100 µm.

### EFFECTS OF THE INVENTION

According to the present invention, it is possible to provide an inorganic powder suitable for the production of a thick heat-dissipating resin composition and a heat-dissipating resin composition using the inorganic powder. Further, according to the present invention, it is also possible to provide production methods suitable for the production of an inorganic powder and a heat-dissipating resin composition.

### BRIEF DESCRIPTION OF THE DRAWINGS

Fig. 1 is a schematic cross-sectional view of a heat-dissipating resin composition according to Embodiment 1.
Fig. 2 is one example of a particle size distribution curve of inorganic particles.
Fig. 3 is another example of a particle size distribution curve of inorganic particles.
Fig. 4 is a schematic view of a cross-sectional SEM image of inorganic particles.
Figs. 5(a) to 5(f) are schematic views for explaining a method for producing a heat-dissipating resin composition.

### EMBODIMENTS OF THE INVENTION

### <Embodiment 1>

### 1. Inorganic powder 10, resin 30, and heat-dissipating resin composition 20

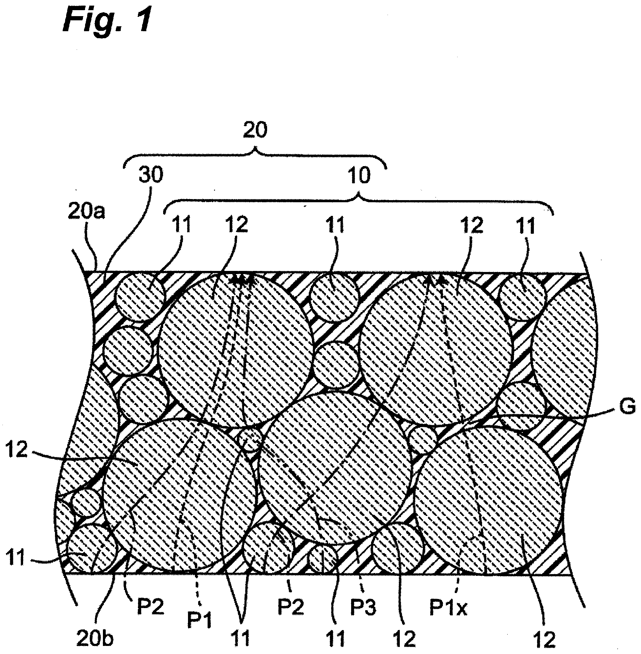

Fig. 1 is a schematic cross-sectional view of a heat-dissipating resin composition 20 according to Embodiment 1. Fig. 1 shows a sheet-shaped heat-dissipating resin composition 20. The heat-dissipating resin composition 20 comprises an inorganic powder 10 and a resin 30. Here, the "inorganic powder 10" is a gathering of particles composed of a plurality of first inorganic particles 11 and a plurality of second inorganic particles 12. Inside the heat-dissipating resin composition 20, many of the plurality of first inorganic particles 11 and the plurality of second inorganic particles 12 are in contact with other adjacent first inorganic particles 11 and/or second inorganic particles 12. The resin 30 fills gaps between the inorganic particles, whereby the first inorganic particles 11 and the second inorganic particles 12 are fixed.

Hereinafter, the inorganic powder 10 and the resin 30 to be used for the heat-dissipating resin composition 20, and the heat-dissipating resin composition 20 comprising them will be described.

### (1) Inorganic powder 10

The inorganic powder 10 comprises at least first inorganic particles 11 having a particle diameter of less than 53 µm and second inorganic particles 12 having a particle diameter of 100 µm or more.

When a heat-dissipating resin composition 20 comprising the inorganic powder 10 is formed, a plurality of the first inorganic particles 11 and/or a plurality of the second inorganic particles 12 are disposed between the lower surface 20b and the upper surface 20a of the heat-dissipating resin composition 20. The first inorganic particles 11 and the second inorganic particles 12 are higher in thermal conductivity than the resin 30. Therefore, heat dissipation paths of the heat-dissipating resin composition 20 are formed so as to preferentially pass through the first inorganic particles 11 and the second inorganic particles 12 which are in contact with or close to each other. When a heat generator (such as an electronic component) is disposed on the lower surface 20b of the heat-dissipating resin composition 20 and a heat-dissipating member (such as a heat sink) is disposed on the upper surface 20a, heat is transmitted from the first inorganic particles 11 and/or the second inorganic particles 12 which exist near the lower surface 20b to the first inorganic particles 11 and/or the second inorganic particles 12 which exist near the upper surface 20a of the heat-dissipating resin composition 20.

The first heat transfer path P1 shown in Fig. 1 is formed of a second inorganic particle 12 that exists in the vicinity of the lower surface 20b and a second inorganic particle 12 that exists in the vicinity of the upper surface 20a of the heat-dissipating resin composition 20. Since the second inorganic particles 12 are in contact with each other, the heat transfer path P1 can be formed without interposing other inorganic particles. Since the second inorganic particles 12 are larger in particle diameter than the first inorganic particles 11, heat transfer paths can be formed only by a small number of the second inorganic particles 12 (two particles in Fig. 1).

In a heat dissipation path P1x, the plurality of inorganic particles 12 forming the heat dissipation path P1x are present close to each other but are not in contact with each other. That is, a gap G is generated between the inorganic particles 12. As shown in Fig. 1, the gap G between the inorganic particles 12 is filled with a resin 30, which is lower in thermal conductivity than the inorganic particles. If the gap G exists on the heat dissipation path P1x, the thermal conductivity of the heat dissipation path P1x is reduced by the resin 30 filling the gap G. Therefore, it is preferable that the number of gaps G is small on the heat dissipation path.

As the number of the inorganic particles forming the heat dissipation path increases, the number of gaps G between the inorganic particles increases. Thus, as described above, it is desirable to reduce the number of the inorganic particles forming the heat dissipation path by using the second inorganic particles 12, and this makes it possible to reduce the number of gaps G between the inorganic particles and to improve the thermal conductivity of the heat-dissipating resin composition 20.

On the other hand, in the case of a heat-dissipating resin composition containing only the second inorganic particles 12, a large space is likely to be formed between the plurality of second inorganic particles 12. Since the space is filled with the resin 30 having a low thermal conductivity, the heat dissipation performance of the heat-dissipating resin composition 20 is deteriorated. By containing the first inorganic particles 11, which are smaller in particle diameter than the second inorganic particles 12, in addition to the second inorganic particles 12 in the heat-dissipating resin composition 20, it is possible to form heat transfer paths utilizing both the second inorganic particles 12 and the first inorganic particles 11.

For example, the second heat transfer path P2 shown in Fig. 1 is formed of a first inorganic particle 11 that exists in the vicinity of the lower surface 20b, a second inorganic particle 12 that exists in the vicinity of the upper surface 20a of the heat-dissipating resin composition 20, and another second inorganic particle 12 that is in contact with both of the first inorganic particle 11 and the second inorganic particle 12.

In another example, the third heat transfer path P3 shown in Fig. 1 is formed of a first inorganic particle 11 that exists in the vicinity of the lower surface 20b, a second inorganic particle 12 that is in contact with the first inorganic particle 11, another first inorganic particle 11 that is in contact with the second inorganic particle 12, and another second inorganic particle 12 that is in contact with the other first inorganic particle 11 and exists in the vicinity of the upper surface 20a of the heat-dissipating resin composition 20.

By entering the first inorganic particles 11 into the space into which the second inorganic particles 12 cannot enter, the second heat transfer path P2 and the third heat transfer path P3 are newly formed, so that the heat dissipation performance of the heat-dissipating resin composition 20 can be improved.

As described above, in order to obtain a heat-dissipating resin composition 20 having good heat dissipation performance, the inorganic powder to be used for a heat-dissipating resin composition 20 comprises both the second inorganic particles 12 and the first inorganic particles 11.

The inorganic powder 10 comprises first inorganic particles 11 and second inorganic particles 12.

It can be determined by a wet sieving method using a mesh having an opening of 100 µm that the inorganic powder 10 contains the second inorganic particles 12. Similarly, it can be determined by a wet sieving method using a mesh having an opening of 53 µm that the inorganic powder 10 contains the first inorganic particles 11.

In the present description, standard sieves specified in JIS Z 8801: 2006 can be used as the mesh having the opening of 100 µm and the mesh having the opening of 53 µm.

In the present description, the wet sieving method can be performed by a method in accordance with JIS K 0069: 1992.

The fact that the inorganic powder 10 contains the first inorganic particles 11 can also be determined by observing a frequency in a range of less than 53 µm in particle diameter when a particle size distribution curve in the range of less than 100 µm in particle diameter, is measured. The frequency can, in some cases, be observed as at least one peak in a range of less than 53 µm in particle diameter. When the frequency is observed as a peak, it is found that the inorganic powder 10 contains the first inorganic particles 11 to such an extent that a peak clearly appears in a range of less than 53 µm of the particle diameter in a particle size distribution curve. In the particle size distribution curve, the peak clearly appears at a particle diameter of less than 53 µm, so that the effect of improving the heat dissipation performance by the first inorganic particles 11 and the effect of improving the heat dissipation performance by the second inorganic particles 12 are sufficiently exhibited, and the heat dissipation performance of the heat-dissipating resin composition 20 can be further improved.

In the measurement of a particle size distribution curve, first, the second inorganic particles 12 are removed from the inorganic powder 10 by a wet sieving method using the mesh having the opening of 100 µm.The inorganic powder 10 containing no second inorganic particles 12 (referred to as "inorganic powder 10 having a particle diameter of less than 100 µm") is measured to particle size distribution measurement by a laser diffraction method using a laser particle size distribution analyzer ["Microtrac: MT - 3300" manufactured by Nikkiso Co., Ltd.]. In the particle size distribution curve obtained, it is checked whether or not the frequency can be observed in the range of less than 53 µm in particle diameter.

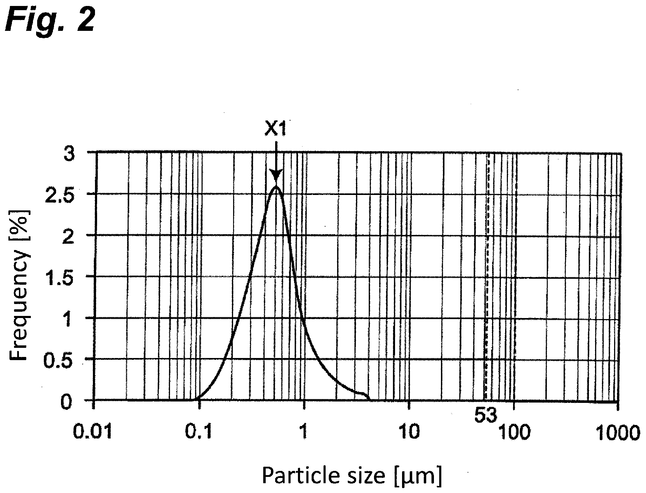

Fig. 2 is one example of a particle size distribution curve of an inorganic powder 10, and an inorganic powder 10 having a particle diameter of less than 100 µm is measured. In the particle size distribution curve of Fig. 2, one peak X1 exists in the range of less than 53 µm in particle diameter. The peak X1 indicates that the inorganic powder 10 having a particle diameter of less than 100 µm contains the first inorganic particles 11.

The inorganic powder 10 may further comprise inorganic particles having other particle diameters. For example, the inorganic powder 10 may contain third inorganic particles having a particle diameter of 53 µm or more and less than 100 µm.

It can be determined by a wet sieving method using the mesh having the opening of 100 µm and the mesh having the opening of 53 µm that the inorganic powder 10 contains the third inorganic particles.

The fact that the inorganic powder 10 contains the third inorganic particles can also be determined by observing a frequency in the range of 53 µm or more and less than 100 µm of the particle diameter in the particle size distribution curve of the inorganic powder 10 having a particle size of less than 100 µm. The frequency can, in some cases, be observed as a peak in a range of 53 µm or more and less than 100 µm in particle diameter.

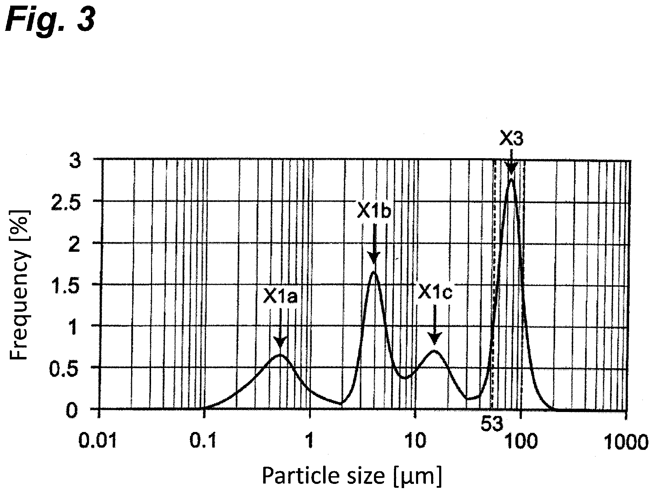

Fig. 3 shows another example of the particle size distribution curve in the range of less than 100 µm in particle diameter, of the inorganic powder 10 having a particle diameter of less than 100 µm, and there are four peaks. The three peaks X1a, X1b, and X1c in the range of less than 53 µm in particle diameter indicate that the inorganic powder 10 having a particle diameter of less than 100 µm contains the first inorganic particles 11. One peak X3 in the range of 53 µm or more and less than 100 µm in particle diameter indicates that the inorganic powder 10 having a particle diameter of less than 100 µm contains the third inorganic particles.

The second inorganic particles 12 have a BET specific surface area of 2 m²/g or less. The BET specific surface area is an index to know the degree of the porosity of the surface of the inorganic particles. The larger the BET specific surface area (m²/g), the more the surface of the inorganic particles contains pores.

Pores on the surface of the inorganic particles absorb a liquid resin raw material that serves as a raw material of the resin 30 contained in the heat-dissipating resin composition 20. Thus, when inorganic particles having a large number of surface pores are used, the resin 30 for fixing between inorganic particles is insufficient, and there is a possibility that the heat-dissipating resin composition 20 cannot be molded. When the blending amount of the resin raw material is increased so that the heat-dissipating resin composition 20 can be molded, the blending amount of the inorganic powder 10 is relatively reduced, and the heat dissipation performance of the resulting heat-dissipating resin composition 20 may be deteriorated.

By adjusting the BET specific surface area of the second inorganic particles to 2 m²/g or less, it is possible to increase the blending amount of the second inorganic particles without excessively increasing the blending amount of the resin raw material, and it is possible to mold the heat-dissipating resin composition 20 having high thermal conductivity.

The BET specific surface area of the second inorganic particles 12 contained in the inorganic powder 10 is measured as follows. The second inorganic particles 12 are collected from the inorganic powder 10 by a wet sieving method using the mesh having the opening of 100 µm. The second inorganic particles 12 obtained are measured by a nitrogen adsorption method using a BET specific surface area analyzer ["2300 PC-1A" manufactured by Shimadzu Corporation]. In the present description, the BET specific surface area is measured based on JIS Z 8830: 2013.

As described above, the second inorganic particles 12 contained in the inorganic powder 10 greatly affect the heat dissipation performance of the heat-dissipating resin composition 20. From the viewpoint of improving the heat dissipation performance of the heat-dissipating resin composition 20, the content of the second inorganic particles 12 contained in the inorganic powder 10 is 30 to 95% by mass where the total amount of the inorganic powder 10 is 100% by mass. The content of the second inorganic particles 12 is preferably 35 to 85% by mass, and more preferably 40 to 80% by mass.

The content of the second inorganic particles 12 contained in the inorganic powder 10 is measured as follows. A predetermined amount (for example, P (g)) of the inorganic powder 10 is weighed out, and the second inorganic particles 12 are collected from the inorganic powder 10 by a wet sieving method using the mesh having the opening of 100 µm. The mass (g) of the second inorganic particles 12 collected is measured, and the measured value is divided by the mass P (g) of the inorganic powder 10 weighed out first to determine the content (% by mass) of the second inorganic particles 12.

The inorganic powder 10 may comprise only the first inorganic particles 11 and the second inorganic particles 12. In this case, the content of the first inorganic particles 11 contained in the inorganic powder 10 is calculated by subtracting the content (% by mass) of the second inorganic particles 12 obtained as described above from 100 (% by mass).
Specifically, the content of the first inorganic particles 11 contained in the inorganic powder 10 is 5 to 70% by mass, preferably 15 to 65% by mass, and more preferably 20 to 60% by mass where the total amount of the inorganic powder 10 is 100% by mass.

The inorganic powder 10 may comprise first inorganic particles 11, second inorganic particles 12, and third inorganic particles. In that case, the content of the first inorganic particles 11 contained in the inorganic powder 10 is, for example, 4 to 65% by mass, preferably 5 to 65% by mass, and more preferably 8 to 40% by mass, and the content of the third inorganic particles is 1 to 40% by mass, preferably 5 to 40% by mass, and more preferably 10 to 30% by mass.

When the inorganic powder 10 comprises the first inorganic particles 11, the second inorganic particles 12, and the third inorganic particles, the contents of the first inorganic particles 11, the second inorganic particles 12, and the third inorganic particles are measured as follows.

A predetermined amount (for example, P (g)) of the inorganic powder 10 is weighed out, and the second inorganic particles 12 are collected from the inorganic powder 10 by a wet sieving method using the mesh having the opening of 100 µm. The mass (g) of the second inorganic particles 12 collected is measured, and the measured value is divided by the mass P (g) of the inorganic powder 10 weighed out first to determine the content (% by mass) of the second inorganic particles 12.

For the inorganic powder 10 resulting from the removal of the second inorganic particles 12 (the inorganic powder 10 having a particle diameter of less than 100 µm), the first inorganic particles 11 and the third inorganic particles are sieved to separate by a wet sieving method using the mesh having the opening of 53 µm. The mass (g) of the first inorganic particles 11 and the mass (g) of the third inorganic particles are measured, and are divided by the mass P (g) of the inorganic powder 10 weighed out first to obtain the content (% by mass) of the first inorganic particles 11 and the content (% by mass) of the third inorganic particles.

It is preferable for the inorganic particles contained in the inorganic powder 10 that cavities existing inside the particles are small or there are no cavities inside.

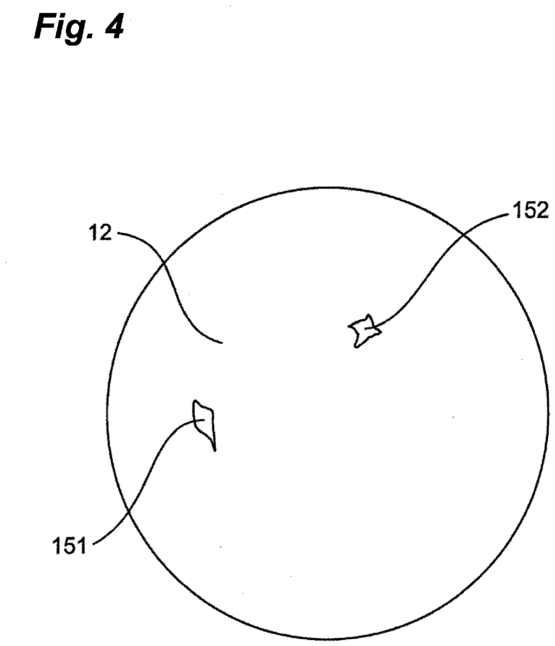

In particular, when the cavity existing in the second inorganic particles 12 is small or no cavity exists, the degree of the effect of improving the heat dissipation performance of the heat-dissipating resin composition 20 is high. As shown in Fig. 4, in a cross-sectional SEM image of the second inorganic particles 12, the internal cavity may be observed as pores 151 and 152. In the cross-sectional SEM image, the pores 151 and 152 existing inside the second inorganic particles 12 preferably have a dimension of less than 40 µm. Here, the "dimension" refers to the diameter of a circle having an area equal to the area of a pore appearing in a cross section, that is, an equivalent circle diameter. "The pores 151 and 152 existing inside the second inorganic particles 12 have a dimension of less than 40 µm" includes a case where the dimension of the pore is 0 µm (that is, the case where there is no pore).

In the observation of the pores 151 and 152 in the cross-sectional SEM image, first, a resin sample in which the inorganic powder 10 is embedded in resin is prepared, and the surface of the resin sample is polished to expose the cross section of the inorganic particles (the first inorganic particles 11 and the second inorganic particles 12 are included and the third inorganic particles may be included) of the inorganic powder 10. A SEM image is taken at an arbitrary position on the polished surface of the resin sample, and the cross section of the inorganic particles is observed. Then, for the second inorganic particle 12 among those inorganic particles in the cross-sectional SEM image, the area of a pore observed in the second inorganic particle is measured and the equivalent circle diameter of the pore area is calculated, whereby the dimension of the pore can be measured.

Specifically, the resin sample in which the inorganic powder 10 is embedded in the resin is processed with a cross section polisher (CP) to expose cross section of inorganic particles in the inorganic powder 10. The polished cross section is observed with a SEM to find second inorganic particles 12, and a measurement target is determined. Here, the second inorganic particles 12 are observed as particles having a maximum dimension (maximum diameter) of 100 µm or more. For example, a SEM image is captured at a magnification of 300 times in a field of view of 300 µm in length × 420 µm in width such that individual pores 151 and 152 existing in the second inorganic particle 12 to be measured can be clearly seen. The cross-sectional SEM image obtained is binarized using image analysis software such as ImageJ such that pores in the inorganic particles are extracted. The area of the pore is calculated from the binarized image obtained and the equivalent circle diameter of the area is determined, whereby the dimension of the pore can be measured. In this method, pores are observed for 15 second inorganic particles 12 randomly extracted, and when all 15 second inorganic particles 12 have no pores with a dimension of 40 µm or more inside, it is determined that the requirement of "the pores 151 and 152 existing inside the second inorganic particles 12 have a dimension of less than 40 µm" is satisfied.

When the particle diameter of the second inorganic particles 12 is large (for example, 3 mm or more), it is difficult to expose the entire cross section of one second inorganic particle 12 by CP processing. In that case, rough polishing may be performed using polishing paper, and then mirror finishing may be performed using a polishing agent. After removing the polished waste clogging the pore by ultrasonic cleaning, the presence or absence and the dimension of the pore may be measured from SEM observation on the polished cross section.

As the inorganic particles such as the first inorganic particles 11, the second inorganic particles 12, and the third inorganic particles contained in the inorganic powder 10, particles made of an inorganic material having high thermal conductivity are preferable, and in particular, particles made of an inorganic material having thermal conductivity of 15 W/mK or more are preferable. As such an inorganic material, ceramics such as alumina, aluminum nitride, boron nitride, silicon nitride, and silicon carbide are suitable. The inorganic particles are preferably ceramic particles. Since ceramics has high thermal conductivity, the heat dissipation performance of the heat-dissipating resin composition 20 can be improved when ceramic particles are used. In the case where insulating ceramics is used for inorganic particles, when the heat-dissipating resin composition 20 is disposed between a heat generator and a heat-dissipating member, short circuit between the heat generator and the heat dissipation member can be suppressed. Thus, the inorganic particles are more preferably insulating ceramic particles, and specifically, are even more preferably alumina particles, aluminum nitride particles, boron nitride, boron nitride, or silicon nitride. Among them, alumina is further preferable because it is inexpensive.

Further, as inorganic particles such as the first inorganic particles 11, the second inorganic particles 12, and the third inorganic particles contained in the inorganic powder 10, aluminum hydroxide particles may be used. Aluminum hydroxide is inferior in thermal conductivity to ceramics, but is suitable for producing a heat-dissipating resin composition 20 for use in a high-temperature environment because aluminum hydroxide is flame-retardant.

The inorganic powder 10 comprises at least the first inorganic particles 11 and the second inorganic particles 12, and these inorganic particles may be made of either the same inorganic material or different inorganic materials. For example, the first inorganic particles 11 may be alumina particles, and the second inorganic particles 12 may be silicon nitride particles. When the inorganic powder 10 further comprises the third inorganic particles, all of the first inorganic particles 11, the second inorganic particles 12, and the third inorganic particles may be made of the same inorganic material, or may be made of different inorganic materials, or two of the three inorganic particles may be made of the same inorganic material and the remaining one may be made of another inorganic material. Furthermore, the first inorganic particles 11 may include two or more kinds of inorganic particles (all of them having a particle diameter of less than 53 µm) made of different inorganic materials, and the second inorganic particles 12 may include of two or more kinds of inorganic particles (all of them having a particle diameter of 100 µm or more) made of different inorganic materials.

The inorganic powder 10 may contain a component other than the inorganic material (for example, an organic compound). For example, the inorganic particles may be surface-treated. The surface treatment is not particularly limited, and examples thereof include treatment with a silane coupling agent.; a titanate coupling agent; an aliphatic carboxylic acid such as oleic acid and stearic acid; an aromatic carboxylic acid such as benzoic acid and a fatty acid ester thereof; a silicate compound such as methyl silicate and ethyl silicate; phosphoric acid; a phosphoric acid compound; or a surfactant. In particular, preferred is a silane coupling agent, which can improve the affinity between the inorganic particles and the resin by surface treatment. By increasing the affinity between the inorganic particles and the resin, the viscosity increase of the resin raw material when the inorganic particles are added to the resin raw material can be suppressed, whereby the blending amount of the inorganic particles can be increased (i.e. improvement of the filling property of the inorganic particles).

As the silane coupling agent, epoxysilane, aminosilane, vinylsilane, acrylsilane, fluorosilane, and the like can be appropriately selected and used. Specific examples of the silane coupling agent include vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, and trifluoropropyltrimethoxysilane.

The method for surface-treating the inorganic particles is not particularly limited, and the surface treatment can be performed by either a dry treatment method or a wet treatment method, or can be performed by an integral method in which a surface treatment agent is mixed with the resin 30 in advance. By the surface treatment, the affinity between the inorganic particles and the resin can be improved and the filling property of the inorganic particles can be improved.

### (2) Resin 30

As shown in Fig. 1, the resin 30 fills gaps between the first inorganic particles 11 and the second inorganic particles 12 contained in the inorganic powder 10, whereby the first inorganic particles 11 and the second inorganic particles 12 are fixed.

The resin material suitable for the resin 30 is not particularly limited, and preferable examples thereof include epoxy resins, silicone resins, silicone rubbers, acrylic resins, phenol resins, melamine resins, urea resins, unsaturated polyesters, polyolefins, fluororesins, polyimides such as polyimide, polyamideimide and polyetherimide, polyesters such as polybutylene terephthalate and polyethylene terephthalate, polyphenylene ethers, polyphenylene sulfides, wholly aromatic polyesters, polysulfones, liquid crystal polymers, polyethersulfones, polycarbonates, maleimide-modified resins, ABS resins, AAS (acrylonitrile-acrylic-rubber-styrene) resins, AES (acrylonitrile-ethylene-propylene-diene rubber-styrene) resins, polyglycolic acid resins, polyphthalamide, polyacetal, polyurethane, and nylon resins. In particular, epoxy resins, silicone resins, and silicone rubbers are preferable.

The resin 30 and the inorganic powder 10 contained in the heat-dissipating resin composition 20 can be blended at a preferable blending ratio. For example, the content of the inorganic powder is preferably 105 parts by weight or more per 100 parts by weight of the resin.

The second inorganic particles 12 contained in the inorganic powder 10 have a large influence on the heat dissipation performance of the heat-dissipating resin composition 20. Thus, by sufficiently increasing the blending ratio of the second inorganic particles 12 to the resin 30, the heat dissipation performance of the heat-dissipating resin composition 20 can be improved. The content of the second inorganic particles 12 per 100 parts by weight of the resin is preferably 100 parts by weight or more, more preferably 200 parts by weight or more, even more preferably 500 parts by weight or more, and particularly preferably 1000 parts by weight or more.

### (3) Heat-dissipating resin composition 20

The blending ratio of the resin 30 and the inorganic powder 10 contained in the heat-dissipating resin composition 20 can be calculated using the mass of the heat-dissipating resin composition 20 measured in advance and the mass of the inorganic powder 10 obtained by removing the resin 30 from the heat-dissipating resin composition 20.

The blending ratio of the resin 30 and the second inorganic particles 12 contained in the heat-dissipating resin composition 20 can be calculated using the mass of the inorganic powder 10 obtained by removing the resin 30 from the heat-dissipating resin composition 20 and the mass of the second inorganic particles 12 collected from the inorganic powder 10 by wet sieving using the mesh having the opening of 100 µm.

For the inorganic powder 10 contained in the heat-dissipating resin composition 20, a measurement of the particle size distribution, a measurement of the BET specific surface area of the second inorganic particles 12, and a measurement of a content of the second inorganic particles 12 can be performed by the following procedures.

First, the resin 30 is removed from the heat-dissipating resin composition 20 to obtain the inorganic powder 10. Examples of a specific method for removing the resin 30 from the heat-dissipating resin composition 20 include a method of dissolving the resin 30 with a solvent to remove it, and a method of ashing the heat-dissipating resin composition 20 to remove the resin 30. The obtained inorganic powder 10 is sieved by a wet sieving using the mesh having the opening of 100 µm to obtain the second inorganic particles 12. The BET specific surface area of the second inorganic particles 12 is measured. In addition, the inorganic powder 10 before sieving and the second inorganic particles 12 obtained by sieved are each weighed, and the ratio of the content of the second inorganic particles 12 contained in the inorganic powder 10 can be calculated.

### 2. Production method

### (1) Method for producing inorganic powder 10

The method for producing the inorganic powder 10 comprises mixing the first inorganic particles 11 and the second inorganic particles 12. If necessary, the method may further comprise mixing the third inorganic particles.

When the first inorganic particles 11, the second inorganic particles 12, and the third inorganic particles are mixed, they may be sequentially mixed or may be mixed at the same time. For example, two kinds of the three kinds of inorganic particles may be chosen and mixed, and the resulting mixture may be mixed with the remaining one kind of inorganic particles. Alternatively, the three kinds of inorganic particles may be mixed at the same time.

As the second inorganic particles 12, inorganic particles having a BET specific surface area of 2 m²/g or less are used. In addition, the blending amount of each kind of inorganic particles is determined such that the resulting inorganic powder 10 contains 30 to 95% by mass of the second inorganic particles 12.

Commercially available inorganic particles (first inorganic particle 11, second inorganic particle 12, and third inorganic particle) may be used. In particular, as the second inorganic particles 12, inorganic material balls for pulverization are suitable.

The second inorganic particles 12 can be produced, for example, by a method of granulating inorganic particles using a granulator, and drying and sintering the resulting dense granules. Specifically, for example, when the second inorganic particles 12 are alumina particles, alumina particles as the second inorganic particles 12 can be produced by a method comprising preparing a slurry of α-alumina seed particles having a particle diameter of 1 µm or less, then mixing the slurry with an α-alumina precursor, drying the resulting mixture, and calcining the dried mixture at a high temperature. The α-alumina precursor is a compound that is transferred to α-alumina by calcination, and examples of the α-alumina precursor include aluminum hydroxide and transition alumina such as y-alumina, δ-alumina, and θ-alumina.

The second inorganic particles 12 can also be produced by a method comprising melting and solidifying inorganic particles by an electric melting method, and pulverizing the resulting solidified material. Specifically, for example, when the second inorganic particles 12 are alumina particles, alumina particles as the second inorganic particles 12 can be produced by a method comprising melting alumina obtained by a Bayer method or the like, at a high temperature in an electric furnace, solidifying the melt, and pulverizing the resulting ingot.

When the second inorganic particle 12 is produced by such a method, the second inorganic particles 12 in which the pores existing inside have the dimension of less than 40 µm in the cross-sectional SEM image are obtained.

### (2) Method for producing heat-dissipating resin composition 20

The method for producing the heat-dissipating resin composition 20 comprises the following Steps 1 to 2.
Step 1: mixing an inorganic powder 10 comprising first inorganic particles 11 and second inorganic particles 12 with a resin raw material.
Step 2: molding the mixture obtained.

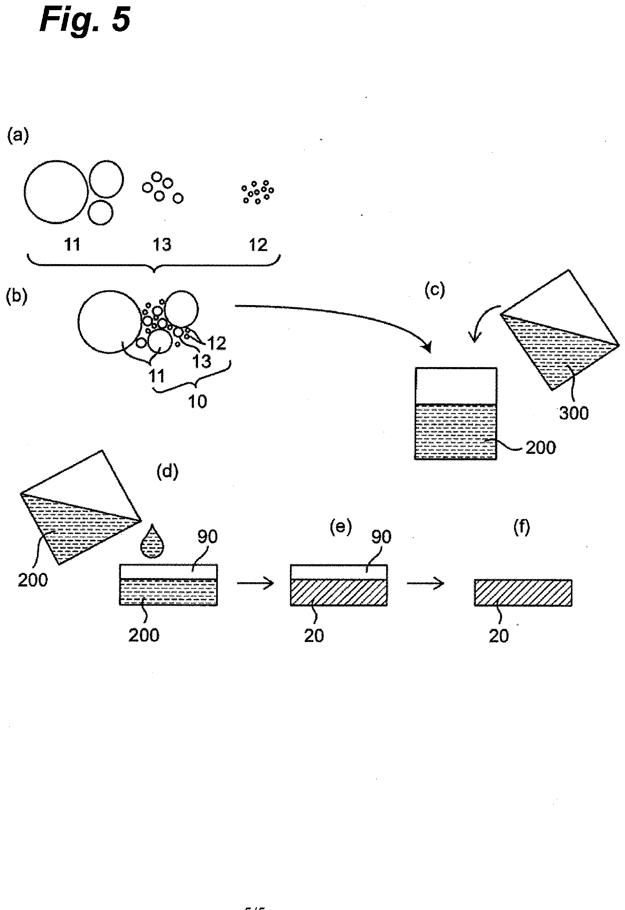

Each step will be described in detail with reference to Figs. 5(a) to 5(f).

### (Step 1: mixing step)

Step 1 is a step of mixing an inorganic powder 10 comprising first inorganic particles 11 and second inorganic particles 12 with a resin raw material 300 to obtain a mixture 200. As the second inorganic particles 12, inorganic particles having a BET specific surface area of 2 m²/g or less are used. The inorganic powder 10 may further comprise third inorganic particles 13.

The blending ratio of the second inorganic particles 12 and the resin raw material 300 is set such that the second inorganic particles account for 30 to 95% by mass where the total amount of the inorganic powder 10 is 100% by mass, and the amount of the second inorganic particles 12 is 100 parts by weight or more per 100 parts by weight of the resin raw material 300.

Figs. 5(a) to 5(c) illustrate one example of Step 1. As shown in Figs. 5(a) and 5(b), the first inorganic particles 11, the second inorganic particles 12, and the third inorganic particles 13 are mixed to obtain the inorganic powder 10. As shown in Fig. 5(c), the inorganic powder 10 obtained and a liquid resin raw material 300 are mixed using an appropriate means (for example, a stirrer) to obtain a mixture 200.

In Figs. 5(a) to 5(c), the inorganic powder 10 is prepared and then the inorganic powder 10 and the resin raw material 300 are mixed, but the procedure is not limited thereto, and a different procedure may be used as long as the mixture 200 is eventually obtained. For example, the first inorganic particles 11, the second inorganic particles 12, and the third inorganic particles 13 may be sequentially added to the resin raw material 300.

### (Step 2: molding step)

In Step 2, the mixture 200 obtained in Step 1 is poured in a mold 90 and cured there to obtain a heat-dissipating resin composition 20. Figs. 5(d) to 5(f) illustrate one example of Step 2.

As shown in Fig. 5(d), the mixture 200 is poured in a desired mold 90. As shown in Fig. 5(e), the mixture 200 is cured in the mold 90. As a result, a heat-dissipating resin composition 20 is obtained. When the resin raw material 300 is a thermosetting resin, the mixture 200 is heated to a curing temperature to be cured. When the resin raw material 300 is a thermoplastic resin, since the resin raw material 300 in the mixture 200 is in a molten state at a high temperature, the resin raw material in the mixture 200 is solidified by cooling. Finally, the heat-dissipating resin composition 20 is taken out of the mold 90 (Fig. 5(f)).

### EXAMPLES

An inorganic powder was obtained by using the first inorganic particles 11, the second inorganic particles 12, and the third inorganic particles shown in Table 1 (particles A to M) and mixing the inorganic particles at a ratio shown in Table 2. The inorganic powder obtained, a resin raw material (epoxy resin), and additives (a curing agent, a curing catalyst, and a surface treatment agent) were blended so as to have the proportions shown in Table 2, and kneaded with a rotation-revolution mixer to obtain a mixture. The mixture was put into a mold placed on a release-treated polyester film, and another release-treated polyester film was placed on the mixture in the mold to mold the mixture. When the charged filling rate was 95% by mass or more, pressure molding was further performed using a press molding machine. Thereafter, the resin composition was heated and cured at 120°C for 120 minutes to obtain a heat-dissipating resin composition.

The "charged filling rate" in Table 2 is the content (% by mass) of the inorganic powder in the mixture.

The particles A to J used (Tables 1 and 2) were as follows.

### (Second inorganic particles 12: particles A to F)

- Particles A: Alumina balls for pulverization having an average particle diameter of 1 mm (manufactured by Nikkato Corporation, trade name: HD-1)
- Particles B: Alumina balls for pulverization having an average particle diameter of 0.3 mm (manufactured by AS ONE Corporation, trade name: AL9-0.3)
- Particles C: Alumina balls for pulverization having an average particle diameter of 0.2 mm (manufactured by AS ONE Corporation, trade name: AL9-0.2)
- Particles D: Alumina ball having an average particle diameter of 15 mm (manufactured by Nikkato Corporation, trade name: HD-15)
- Particle E: Alumina particles having an average particle diameter of 2 mm (manufactured by Sumitomo Chemical Co., Ltd., trade name: AKQ-10)
- Particles F: Silicon carbide particles having an average particle diameter of 0.3 mm (manufactured by Pacific Rundum Co., Ltd., trade name: RC-24)

### (Third inorganic particles 13: particles G to H)

- Particles G: Alumina particles having an average particle diameter of 70 µm (manufactured by Denka Co., Ltd., trade name: DAW-70)
- Particles H: Silicon carbide particles obtained by dry-sieving silicon carbide particles (manufactured by Pacific Rundum Co., Ltd., trade name: RC-100F) with a 105 µm mesh and adjusting the average particle diameter to 80 µm

The particles G and H may comprise not only the third inorganic particles 13 (the particle diameter is 53 µm or more and less than 100 µm) but also inorganic particles other than the third inorganic particles 13 (the particle diameter is less than 53 µm, or 100 µm or more). In the present example, however, the particles G and H are classified as the third inorganic particles 13 for convenience.

### (First inorganic particles 11: particles I to M)

- Particles I: Alumina particles having an average particle diameter of 45 µm (manufactured by Denka Co., Ltd., trade name: DAW-45)

The particles I may include not only the first inorganic particles 11 (having a particle size of less than 53 µm) but also inorganic particles other than the first inorganic particles 11 (having a particle size of 53 µm or more), but in the present Example, the particles I were classified as the first inorganic particles 11 for convenience.
- Particles J: Alumina particles having an average particle diameter of 12 µm (manufactured by Denka Co., Ltd., trade name: DAW-10)
- Particles K: Alumina particles having an average particle diameter of 5 µm (manufactured by Denka Co., Ltd., trade name: DAW-05)
- Particles L: Alumina particles having an average particle diameter of 0.4 µm (manufactured by Sumitomo Chemical Co., Ltd., trade name: AA-03)
- Particles M: Alumina particles having an average particle diameter of 0.3 µm (manufactured by Denka Co., Ltd., trade name: AFSP-20)

The resin raw materials, the curing agents, the curing catalysts, and the surface treatment agents which were used (listed in Table 2) were as follows.
- Resin raw material 300: Epoxy resin (epoxy 828)
- Curing agent: Alicyclic backbone acid anhydride (manufactured by New Japan Chemical Co., Ltd., trade name: MH-700)
- Curing catalyst: Imidazole-based curing accelerator (manufactured by Shikoku Chemicals Corporation, trade name: 1B2PZ)
- Surface treatment agent: 3-Glycidoxypropyltrimethoxysilane (manufactured by Dow Corning Toray Co., Ltd., trade name: Z -6040)

**[Table 1]**

| | Particle No. | Trade name | Average particle diameter (um) | BET specific surface area (m²/g) |
|---|---|---|---|---|
| Second inorganic particles 12 | A | HD-1 | 1,000 | <0.1 |
| | B | AL9-0.3 | 300 | 0.3 |
| | c | AL9-0.2 | 200 | 0.4 |
| | D | HD-15 | 15,000 | <0.1 |
| | E | AKQ-10 | 2,000 | 2.8 |
| | F | RC-24 | 300 | <0.1 |
| Third inorganic particles 13 | G | DAW-70 | 70 | 0.2 |
| | H | RC-100F Sieved product | 80 | <0.1 |
| First inorganic particles 11 | I | DAW-45 | 45 | 0.2 |
| | J | DAW-10 | 12 | 0.4 |
| | K | DAW-05 | 5 | 0.4 |
| | L | AA-03 | 0.4 | 5.2 |
| | M | ASFP-20 | 0.3 | 13.4 |

**[Table 2]**

| | | Particle No. | | Trade name | Example 1 | Example 2 | Example 3 | Example 4 | Example 5 | Example 6 | Example 7 | Comparati ve Example 1 | Comparati ve Example) 2 | Comparati ve Example 3 | Comparati ve Example 4 | Comparati ve Example 5 | Comparati ve Example 6 |
|---|---|---|---|---|---|---|---|---|---|---|---|---|---|---|---|---|---|
| Second inorganic particles 12 | | A | | HD-1 | 32 | 32 | 32 | 72 | | 24 | | 120 | | | | | |
| | | B | | AL9-0.3 | 20 | 20 | 20 | | | | | | 20 | | | | |
| | | C | | AL9-0.2 | | | | | 42 | | | | | | | | |
| | | D | | HD-15 | | | | | | 60 | | | | | | | |
| | | E | | AKQ-10 | | | | | | | | | 32 | | | | |
| | | F | | RC-24 | | | | | | | 84 | | | | | | |
| Third inorganic particles 13 | | G | | DAW-70 | | | | | 20 | 6 | | | | 84 | 84 | 84 | |
| | | H | | RC-100F Sieved product | | | | | | | | | | | | | 84 |
| First inorganic particles 11 | | I | | DAW-45 | 20 | 20 | 20 | | 10 | 12 | | | 20 | | | | |
| | | J | | DAW-10 | 18 | 18 | 18 | | 18 | 12 | 24 | | 18 | | | | 24 |
| | | K | | DAW-05 | 18 | 18 | 18 | | 18 | | | | 18 | 24 | 24 | 24 | |
| | | L | | AA-03 | 12 | 12 | 12 | 48 | 12 | 6 | 12 | | 12 | | | | 12 |
| | | M | | ASFP-20 | | | | | | | | | | 12 | 12 | 12 | |
| Resin, additives | | Epoxy resin | | epoxy828 | 3.9 | 2.0 | 12.0 | 2.0 | 3.9 | 2.0 | 6.7 | 3.9 | 7.7 | 3.9 | 2.0 | 12.0 | 6.7 |
| | | Curing agent | | MH-700 | 3.5 | 1.8 | 10.6 | 1.8 | 3.5 | 1.8 | 6.0 | 3.5 | 6.8 | 3.5 | 1.8 | 10.6 | 6.0 |
| | | Curing catalyst | | 1B2PZ | 0.3 | 0.2 | 0.9 | 0.2 | 0.3 | 0.2 | 0.7 | 0.3 | 0.6 | 0.3 | 0.2 | 0.9 | 0.7 |
| | | Surface treatment agent | | Z6040 | 1.2 | 1.2 | 1.2 | 1.2 | 1.2 | 1.2 | 1.2 | 1.2 | 1.2 | 1.2 | 1.2 | 1.2 | 1.2 |
| Inorgani c powder | Percentage of second inorganic particles 12 | | | (%) | 43 | 43 | 43 | 60 | 35 | 70 | 70 | 100 | 43 | 0 | 0 | 0 | 0 |
| | Observatio n of frequency in particle size distribution curve | | Particle diameter range of 53 µm or more and less than 100 µm | Present/ Absent | Absent | Absent | Absent | Absent | Present | Present | Absent | Absent | Absent | Present | Present | Present | Absent |
| | | | Particle diameter range of less than 53 µm | Present/ Absent | Present | Present | Present | Present | Present | Present | Present | Absent | Present | Present | Present | Present | Present |
| Kneaded product physical property | Charged filling rate | | | (mass%) | 93.1 | 95.9 | 82.9 | 95.9 | 93.1 | 95.9 | 90.0 | 93.1 | 88.0 | 93.1 | 95.9 | 82.9 | 90.0 |
| | Blending Amount of second inorganic particles 12 per 100 parts by weight of resin | | | (parts by weight) | 675 | 1325 | 221 | 1834 | 545 | 2140 | 632 | 1558 | 344 | 0 | 0 | 0 | 0 |
| | Moldability | | | - | A | A | A | A | A | A | A | B | C (Not molded) | A | C (Not molded) | A | A |
| Cured product physical property | Thermal conductivity | | | (W/mK) | 8.2 (Good) | 10.4 (Excellent) | 6.1 (Good) | 12.5 (Excellent) | 7.5 (Good) | 18.4 (Excellent) | 5.6 (Good) | 4.3 (Not acceptable) | - | 4.9 (Not acceptable) | - | 3.0 (Not acceptable) | 4.5 (Not acceptable) |

The inorganic powders and the heat-dissipating resin compositions obtained were measured or evaluated for the following items.

### (1) Content of second inorganic particles 12

10 g of the inorganic powder obtained in the formulation shown in Table 2 were weighed out, and second inorganic particles 12 were collected by a wet sieving method using a mesh having an opening of 100 µm.

The mass (g) of the inorganic particles collected was measured, and was divided by 10 g that is the mass of the inorganic powder weighed out first, to calculate the content (% by mass) of the second inorganic particles 12 in the inorganic powder. The results are shown in Table 2.

### (2) Particle size distribution curve

For the inorganic powder 10 (inorganic powder 10 having a particle diameter of less than 100 µm) after the second inorganic particles 12 were removed in "(1) Content of second inorganic particles 12", particle size distribution was measured and a particle size distribution curve was produced.

The particle size distribution of the inorganic powder 10 having a particle diameter of less than 100 µm was measured by a laser diffraction method using a laser particle size distribution analyzer ["Microtrac: MT-3300" manufactured by Nikkiso Co., Ltd.].

In the particle size distribution curve obtained, whether or not the frequency was observed in each of the particle diameter range of less than 53 µm and the particle diameter range of 53 µm or more and less than 100 µm was checked and the results were shown in Table 2.

### (3) Moldability

The mixture obtained based on the blend listed in Table 2 was subjected to an evaluation test of moldability. The evaluation criteria were as follows. The evaluation test result is shown in the row of "moldability" in Table 2.
"A": There was no problem in molding.
"B": Molding was able to be performed, but the molded article contained many bubbles.
"C": The mixture of the inorganic particles and the resin was excessively high in viscosity, so that it was not able to be molded, or since the mixture was powdery, it was not able to be molded.

### (4) Thermal conductivity

The mixture obtained based on the blend listed in Table 2 was molded into a size of 10 mm in width × 10 mm in length × 1 mm in thickness and then the resin was solidified to prepare a heat-dissipating resin composition (a sample for measurement). The thermal conductivity of the sample was measured using a thermal resistance analyzer (LFA 467 manufactured by NETZSCH) by a laser flash method. A thermal conductivity of less than 5 W/mK is regarded as "not acceptable", a thermal conductivity of 5 W/mK or more and less than 10 W/mK is regarded as "good", and a thermal conductivity of 10 W/mK or more is regarded as "excellent". In Comparative Examples 2 and 4, the thermal conductivity was not measured because the mixtures were poor in moldability and samples for measurement could not be prepared.

Examples 1 to 7 and Comparative Examples 1 to 6 are discussed below.

In Examples 1 to 7, the second inorganic particles 12 (particles A to D and F having an average particle diameter of 200 µm to 15000 µm) used had a BET specific surface area of 2 m²/g or less. The sieved second inorganic particles 12 also had a BET specific surface area of 2 m²/g or less.

The inorganic powders of Examples 1 to 7 contained the second inorganic particles 12 in an amount of 30 to 95% by mass. The particle size distribution curves of these inorganic powders were examined, and frequencies were observed in the range of less than 53 µm in particle diameter. As a result, it was determined that the inorganic particles of Examples 1 to 7 contained the first inorganic particles 11. In Examples 5 and 6, frequencies were further observed in the range of 53 µm or more and less than 100 µm of the particle diameter in the particle size distribution curves. As a result, it was determined that the inorganic particles of Examples 5 and 6 contained the third inorganic particles 13.

In the heat-dissipating resin compositions (samples for measurement) of Examples 1 to 7, the blending amount of the second inorganic particles 12 per 100 parts by weight of the resin was 100 parts by weight or more, and the thermal conductivity of the samples obtained for measurement was 5 W/mK or more, which was good. In particular, in Examples 2, 4, and 6, the blending amount of the second inorganic particles 12 per 100 parts by weight of the resin was 1000 parts by weight or more, and the samples obtained for measurement exhibited superior thermal conductivities of 10 W/mK or more.

Regarding the inorganic powder of Comparative Example 1, no frequency was observed in the range of less than 53 µm in particle diameter in the particle size distribution curve. That is, the inorganic powder of Comparative Example 1 does not contain the first inorganic particles 11. Thus, the shape retainability of the heat-dissipating resin composition was poor, the molded body contained large bubbles, and the thermal conductivity of the heat-dissipating resin composition (a sample for measurement) was less than 5 W/mK.

In the inorganic powder of Comparative Example 2, the BET specific surface area of the second inorganic particles 12 used (particles E having an average particle diameter of 2000 µm) was 2 m²/g or more. The sieved second inorganic particles 12 also had a BET specific surface area of 2 m²/g or more. Thus, the second inorganic particles 12 absorbed the resin raw material, and the mixture became powdery. As a result, the moldability of the mixture was significantly deteriorated, and it was not possible to prepare a heat-dissipating resin composition (a sample for measurement).

The inorganic powders of Comparative Examples 3, 5 and 6 did not contain the second inorganic particles 12. Thus, the thermal conductivity of the heat-dissipating resin compositions (samples for measurement) was less than 5 W/mK.

The inorganic powder of Comparative Example 4 did not contain the second inorganic particles 12. Furthermore, since the charged filling rate in preparing the heat-dissipating resin composition (a sample for measurement) was high, the viscosity of the mixture of the inorganic powder and the resin was excessively high. As a result, the moldability of the mixture was significantly deteriorated, and it was not possible to prepare a heat-dissipating resin composition (a sample for measurement).

### DESCRIPTION OF REFERENCE SIGNS

- 10: Inorganic powder
- 11: First inorganic particle
- 12: Second inorganic particle
- 13: Third inorganic particle
- 20: Heat-dissipating resin composition
- 200: Mixture
- 30: Resin
- 300: Resin raw material
- 90: Mold
- 151,152: Pore

## Claims

1. An inorganic powder for use in a heat-dissipating resin composition, comprising:
first inorganic particles having a particle diameter of less than 53 µm; and
second inorganic particles having a particle diameter of 100 µm or more and a BET specific surface area of 2 m²/g or less, a content of the second inorganic particles being 30 to 95% by mass.

2. The inorganic powder according to claim 1, wherein in a cross-sectional SEM image, pores existing inside the second inorganic particles have a maximum dimension of less than 40 µm.

3. The inorganic powder according to claim 1 or 2, further comprising third inorganic particles having a particle diameter of 53 µm or more and less than 100 µm.

4. A heat-dissipating resin composition comprising: a resin; and the inorganic powder according to any one of claims 1 to 3, wherein
the heat-dissipating resin composition contains the second inorganic particles in an amount of 100 parts by weight or more per 100 parts by weight of the resin.

5. A method for producing an inorganic powder used in a heat-dissipating resin composition, the inorganic powder comprising inorganic particles, the method comprising:
mixing first inorganic particles having a particle diameter of less than 53 µm and second inorganic particles having a particle diameter of 100 µm or more and having a BET specific surface area of 2 m²/g or less such that the inorganic powder contains 30 to 95% by mass of the second inorganic particles.

6. The method for producing an inorganic powder according to claim 5, further comprising
mixing the first inorganic particles and/or the second inorganic particles with third inorganic particles having a particle diameter of 53 µm or more and less than 100 µm.

7. A method for producing a heat-dissipating resin composition comprising: a resin; and an inorganic powder that comprises inorganic particles, the method comprising:
mixing first inorganic particles having a particle diameter of less than 53 µm, second inorganic particles having a particle diameter of 100 µm or more and having a BET specific surface area of 2 m²/g or less, and a resin raw material such that the inorganic powder contains the second inorganic particles in an amount of 30 to 95% by mass and the second inorganic particles are blended in an amount of 100 parts by weight or more per 100 parts by weight of the resin raw material; and
molding the mixture obtained.

8. The method for producing a heat-dissipating resin composition according to claim 7, wherein the inorganic powder further comprises third inorganic particles having a particle diameter of 53 µm or more and less than 100 µm.
